# EUROPÄISCHE PATENTSCHRIFT

(11) **EP 1 635 066 B1**
(45) Veröffentlichungstag und Bekanntmachung des Hinweises auf die Patenterteilung: **03.06.2015**
(21) Anmeldenummer: 05107639.6
(22) Anmeldetag: 19.08.2005
(51) Int. Cl.: F04D 27/00, F02C 3/22, F02C 7/22

(54) **Gasversorgungsanlage und zugehöriges Betriebsverfahren für eine Gasturbine**
Gas supply apparatus and associated method of operation for a gas turbine
Installation d'alimentation en gaz et procédé d'utilisation associé pour une turbine à gaz

(30) Priorität: 09.09.2004 CH 14862004
(43) Veröffentlichungstag der Anmeldung: 15.03.2006
(73) Patentinhaber: ALSTOM Technology Ltd, 5400 Baden (CH)
(72) Erfinder: Brautsch, Andreas, 5303, Würenlingen (CH); Mitsis, George, 5404, Baden-Dättwil (CH); Queloz, Patrick, 4054, Basel (CH); Van Straaten, Floris, 8907, Wettswil (CH)
(74) Vertreter: Alstom Technology Ltd

(56) Entgegenhaltungen:
- EP-A1- 0 661 426
- EP-A2- 1 016 787
- DE-A1- 1 503 568
- DE-A1- 10 012 380
- DE-A1- 10 341 758
- US-B1- 6 622 489

## Beschreibung

### Technisches Gebiet

Die vorliegende Erfindung betrifft ein Verfahren zum Betreiben einer Gasversorgungsanlage für eine Gasturbine mit den Merkmalen des Oberbegriffs des Anspruchs 1. Die vorliegende Erfindung betrifft außerdem eine Gasversorgungsanlage für eine Gasturbine, mit den Merkmalen des Oberbegriffs des Anspruchs 7.

### Stand der Technik

Aus der EP 1 016 787 A2 sind eine Gasversorgungsanlage sowie ein zugehörige Betriebsverfahren der eingangs genannten Art bekannt. Die bekannte Gasversorgungsanlage umfasst eine gasführende Pipeline, einen in der Pipeline angeordneten, regelbaren Kompressor und einen an die Pipeline angeschlossenen, dem Kompressor nachgeschalteten Verbraucher, nämlich eine Gasturbine. Zur Betätigung des Kompressors ist eine Steuereinrichtung in Form eines Reglers vorgesehen, der den Kompressor in Abhängigkeit eines Soll-Ist-Vergleichs eines Kompressorauslassdrucks regelt Zur Regelung kann der Regler die Drehzahl und/oder die Leitschaufelstellung des Kompressors verändern. Der Kompressorauslassistdruck kann auf herkömmliche Weise am Kompressorauslass gemessen werden. Im Unterschied dazu ist der Kompressorauslasssolldruck üblicherweise fest vorgegeben, wobei dieser Vorgabewert vom jeweiligen Standort der Gasturbine abhängt, insbesondere von den zu erwartenden niedrigsten Umgebungstemperaturen. Desweiteren ergibt sich der vorbestimmte Kompressorauslasssolldruck aus der maximalen Gasturbinenleistung sowie der maximalen Gastemperatur und aus dem unteren Heizwert des Gases.

Bei der bekannten Gasversorgungsanlage ist außerdem stromauf des Kompressors ein Drosselorgan in der Pipeline angeordnet, das mit Hilfe eines separaten Reglers betätigt wird. Bei einer Druckänderung in der Pipeline kann mit Hilfe des Drosselorgans stets ein gewünschter Kompressoreintrittsdruck eingeregelt werden, der es dem Kompressor ermöglicht, den Kompressoraustrittssolldruck einzustellen. Auf diese Weise kann der Kompressor stets mit hoher Leistung, insbesondere mit seiner Nennleistung betrieben werden. Dies ist jedoch aus energetischen Gründen nicht immer sinnvoll.

Insbesondere kommen hier regelmäßig Kompressoren mit festem Kompressionsverhältnis zur Anwendung. Bei einem Druckanstieg in der Pipeline kann der Austrittsdruck unzulässig hohe Werte erreichen, wenn nicht der Eintrittsdruck mit Hilfe des vorgeschalteten Drosselorgans entsprechend abgeregelt wird. Ein derartiger Kompressor arbeitet permanent bei Volllast bzw. Nennlast.

Aus der DE 15 03 568 A1 ist eine Verdichterstation für gasförmige Medien, die zum Ausgleich des Druckabfalles in der Leitung zur Aufrechterhaltung eines Endendruckes beim Verbraucher dienen, bekannt.

Die DE 103 41 758 A1 beschreibt eine Gaskompressor-Steuer- bzw. Regelvorrichtung und einen Gasturbinenkraffwerk-Steuer- bzw. Regelmechanismus, die auf einen konstanten Gaskompressoraustrittsdruck regeln einen Druckanstieg eines einer Gasturbine zugeführten Brennstöffgases selbst dann unterdrücken können, wenn eine Lastzurückweisung oder ein Lastverlust auftritt.

### Darstellung der Erfindung

Die vorliegende Erfindung wie sie in den Ansprüchen gekennzeichnet ist, beschäftigt sich mit dem Problem, für eine Gasversorgungsanlage der eingangs genannten Art eine verbesserte Ausführungsform bzw. ein verbessertes Betriebsverfahren anzugeben, wodurch insbesondere ein reduzierter Energieverbrauch des Kompressors erreicht wird.

Dieses Problem wird durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, den Kompressor in Abhängigkeit des Verbrauchereintrittsdrucks zu regeln. Hierdurch kann der Kompressor unmittelbar in Abhängigkeit des tatsächlichen Bedarfs betrieben werden, was es ermöglicht, bei einem reduzierten Druckbedarf die Leistung des Kompressors entsprechend zu reduzieren. Hierdurch kann der Energieverbrauch des Kompressors gesenkt werden. Durch die Erfindung wird somit eine Rückkopplung des aktuellen Leistungsbedarfs der Gasturbine zur vorgeschalteten Gasversorgungsanlage geschaffen.

Dabei wird der erforderliche Verbrauchereintrittsdruck in Abhängigkeit wenigstens eines aktuellen Verbraucherparameters, z.B. dessen Lastzustand, und/oder wenigstens eines aktuellen Umgebungsparameters, wie z.B. der Umgebungstemperatur, ermittelt. Auf diese Weise kann zumindest für einen Nennbetriebszustand des Verbrauchers der erforderliche Verbrauchereintrittssolldruck unabhängig vom Verbraucher bzw. unabhängig von einer aktiven Rückmeldung des Verbrauchers ermittelt werden. Die Gasversorgungsanlage kann dadurch autonom arbeiten.

Ausserdem wird der Kompressoraustrittsolldruck (p_{2SOLL}) in Abhängigkeit eines Druckabfalls ermittelt, der sich in der Pipeline zwischen einem Kompressoraustritt und einem Verbrauchereintritt einstellt.

Von besonderer Bedeutung ist eine Ausführungsform, bei welcher dem Kompressor eine Druckabsenkeinrichtung vorgeschaltet ist. Bei der Erfindung wird diese Druckabsenkeinrichtung nur dann benötigt, wenn der Pipelinedruck, also der stromauf der Druckabsenkeinrichtung gemessene Kompressoreintrittsdruck größer ist als der ermittelte Kompressoraustrittssolldruck. In diesem Fall wird mit Hilfe der Druckabsenkeinrichtung der überhöhte Pipelinedruck auf den benötigten Kompressoraustrittssolldruck gedrosselt. Gleichzeitig wird dabei der Kompressor deaktiviert, so dass dieser keine Energie aufnimmt. Im Unterschied dazu wird bei kleineren Pipelinedrücken die Druckabsenkeinrichtung deaktiviert und mit Hilfe des Kompressors der erforderliche Druckanstieg erzeugt.

Zur Deaktivierung der Druckabsenkeinrichtung und zur Deaktivierung des Kompressors können entsprechende Bypässe vorgesehen sein, die intern, also innerhalb der Druckabsenkeinrichtung bzw. innerhalb des Kompressors, oder außerhalb, also durch separate Bypassleitungen, die insbesondere außerhalb des Kompressors bzw. der Druckabsenkeinrichtung verlaufen, gebildet sein können.

Weitere wichtige Merkmale und Vorteile der vorliegenden Erfindung ergeben sich aus den Unteransprüchen, der Zeichnung und aus der nachfolgenden Beschreibung der Zeichnung.

### Kurze Beschreibung der Zeichnungen

In der nachfolgenden Zeichnung ist ein spezielles Ausführungsbeispiel, ohne Beschränkung der Allgemeinheit, dargestellt und wird im folgenden näher erläutert.

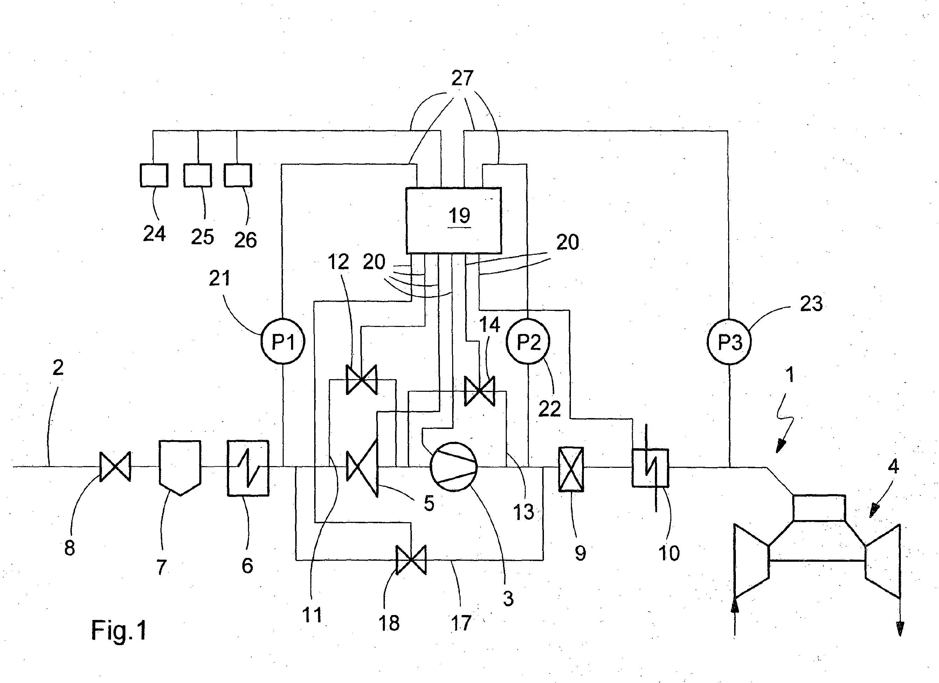

Die einzige Fig. 1 zeigt eine stark vereinfachte, schaltplanartige Prinzipdarstellung einer erfindungsgemäßen Gasversorgungsanlage.

### Wege zur Ausführung der Erfindung

Entsprechend Fig. 1 umfasst eine Gasversorgungsanlage 1 eine Pipeline 2, in der ein Kompressor 3 angeordnet ist und die an einen Verbraucher 4 angeschlossen ist. Dabei ist der Verbraucher 4 dem Kompressor 3 nachgeschaltet. Eshandelt sich beim Verbraucher 4 um eine Gasturbine, insbesondere zur Stromerzeugung in einer Kraftwerksanlage.

In der Pipeline 2 ist stromauf des Kompressors 3 eine Druckabsenkeinrichtung 5 vorgeschaltet, mit deren Hilfe in dem die Druckabsenkeinrichtung 5 durchströmenden Gas der Druck gezielt abgesenkt werden kann. Stromauf der Druckabsenkeinrichtung 5 ist eine Taupunktheizeinrichtung 6 angeordnet, mit deren Hilfe bei niedrigen Umgebungstemperaturen das Gas über den Taupunkt gegebenenfalls mitgeführter Flüssigkeit erwärmt werden kann. Stromauf dieser Taupunktheizeinrichtung 6 ist eine Abscheideeinrichtung 7 zum Abscheiden von Partikeln und/oder Tröpfchen, die von der Gasströmung mitgeführt werden, angeordnet. Stromauf der Abscheideeinrichtung 7 ist hier noch ein Sperrventil 8 angeordnet, mit dessen Hilfe, z.B. im Notfall, die Gasversorgung komplett abgeschaltet werden kann.

Stromab des Kompressors 3 ist ein Feinfilter 9 angeordnet, mit dessen Hilfe kleine bzw. feinkörnige flüssige oder feste Verunreinigungen aus der Gasströmung herausgefiltert werden können. Stromab dieses Feinfilters 9 ist eine Vorheizeinrichtung 10 angeordnet, mit deren Hilfe die Gasströmung im Bedarfsfall auf eine vorbestimmte Temperatur erwärmt werden kann.

Obwohl bei der hier gezeigten Ausführungsform die genannten Komponenten, also zumindest Kompressor 3, Druckabsenkeinrichtung 5, Taupunktheizeinrichtung 6, Abscheideeinrichtung 7, Feinfilter 9 und Vorheizeinrichtung 10 jeweils nur einmal dargestellt sind, ist es zumindest im Kraftwerksbau üblich, derartige Komponenten, die für die Gasversorgung der Gasturbine 4 wichtig sind, doppelt, also redundant auszugestalten. Die jeweils redundanten Komponenten sind dann zweckmäßig zueinander parallel geschaltet.

Bei der hier gezeigten Ausführungsform ist außerdem ein erster Bypass 11 vorgesehen, der zur Umgehung bzw. zur widerstandsarmen Durchströmung der Druckabsenkeinrichtung 5 dient. Der erste Bypass 11 kann intern, also im Innern der Druckabsenkeinrichtung 5 ausgebildet sein. Alternativ kann der erste Bypass 11 - wie hier dargestellt - durch eine separate Bypassleitung gebildet sein. Desweiteren kann der erste Bypass 11 steuerbar sein, was hier durch ein erstes Steuerventil 12 angedeutet ist. Bei einem internen ersten Bypass 11 kann dieses erste Steuerventil 12 grundsätzlich entfallen, da seine Funktion durch eine Steuerung oder durch Stellglieder der Druckabsenkeinrichtung 5 realisiert sein kann.

Desweiteren ist hier ein zweiter Bypass 13 vorgesehen, der zur Umgehung bzw. zur widerstandsarmen Durchströmung des Kompressors 3 dient und ebenfalls steuerbar ist. Auch der zweite Bypass 13 kann intern, also integral im Kompressor 3 oder extern durch eine separate Bypassleitung realisiert sein. Der zweite Bypass 13 ist ebenfalls direkt oder indirekt über den Kompressor 3 steuerbar, was hier durch ein zweites Steuerventil 14 angedeutet ist.

Außerdem ist hier noch ein dritter Bypass 17 vorgesehen, der sowohl die Druckabsenkeinrichtung 5 als auch den Kompressor 3 umgeht, extern, also mit einer separaten Bypassleitung realisiert ist und mit Hilfe eines dritten Steuerventils 18 steuerbar ist. Auch dieser dritte Bypass 17 ist grundsätzlich intern realisierbar.

Die erfindungsgemäße Gasversorgungsanlage 1 ist im Übrigen mit einer Steuereinrichtung 19 ausgestattet, die über mehrere Steuerleitungen 20 die steuerbaren bzw. regelbaren Komponenten der Gasversorgungsanlage 1 steuert, also hier den Kompressor 3, die Druckabsenkreinrichtung 5, die Vorheizeinrichtung 10 und die drei Bypässe 11, 13, 17 bzw. deren Steuerventile 12, 14, 18.

Darüber hinaus verfügt die Gasversorgungsanlage 1 über mehrere Sensoren, nämlich einen ersten Drucksensor 21 zur Ermittlung eines Kompressoreintrittistdrucks p_{1IST}, einen zweiten Drucksensor 22 zur Ermittlung eines Kompressoraustrittistdrucks p_{2IST,} einen dritten Drucksensor 23 zur Ermittlung eines Verbrauchereintrittistdrucks p_{3IST} sowie weitere Sensoren 24, 25, 26 zur Ermittlung von wenigstens einem Umgebungsparameter, wie z.B. Umgebungstemperatur, Umgebungsdruck und Luftfeuchtigkeit. Die genannten Sensoren 21 bis 26 sind über entsprechende Signalleitungen 27 an die Steuereinrichtung 19 angeschlossen. Auf diese Weise kann die Steuereinrichtung 19 die von den Sensoren 21 bis 26 erfassten Werte für die Steuerung bzw. Regelung der daran angeschlossenen Komponenten berücksichtigen.

Bei der Ausführungsform gemäß Fig. 1 ist die Druckabsenkeinrichtung 5 bezüglich des Kompressors 3 als separates Bauteil ausgestaltet. Bevorzugt wird jedoch eine Ausführungsform, bei welcher die Druckabsenkeinrichtung 5 körperlich oder funktionell in den Kompressor 3 integriert ist. Eine derartige Integration lässt sich funktionell besonders einfach bei einem regelbaren Kompressor 3 realisieren, beispielsweise mit Hilfe verstellbarer Leitschaufeln z.B. am Eintritt des Kompressors 3. Es ist klar, dass bei einer solchen Ausführungsform grundsätzlich nur der dritte Bypass 17 erforderlich ist.

Die erfindungsgemäße Gasversorgungsanlage 1 arbeitet wie folgt:
Der Gasdruck in der Pipeline 2 ist Schwankungen ausgesetzt, die sich aus der aktuellen Gaseinspeisung sowie den aktuellen Umgebungsbedingungen ergeben können. Damit der Verbraucher 4, und zwar eine Gasturbine, bei einem möglichst hohen Wirkungsgrad betrieben werden kann, ist es erforderlich, einen möglichst konstanten, also stationären Betriebszustand für den Verbraucher 4 zu realisieren. Hierzu müssen die Schwankungen in der Pipeline 2 kompensiert werden. Bei der Erfindung erfolgt dies vorwiegend über eine entsprechende Ansteuerung des Kompressors 3, der zu diesem Zweck steuerbar bzw. regelbar ausgestaltet ist. Dabei wird die Leistungsabgabe des Kompressors 3 gesteuert bzw. geregelt. Beispielsweise kann hierzu die Drehzahl des Kompressors variiert werden. Ebenso können Leitschaufeln des Kompressors 3 entsprechend verstellt werden. Ziel ist es dabei, den Kompressor 3 möglichst selten mit maximaler Leistung zu betreiben. Die maximale Leistung des Kompressors 3 ist für die ungünstigste Konstellation von Umgebungsbedingungen und Gasbedarf bzw. Gasdruckbedarf des Verbrauchers 4 dimensioniert. Derart ungünstige Konstellationen treten während der Lebenszeit des Verbrauchers 4 jedoch nur vergleichsweise selten auf. Durch den erfindungsgemäß geregelten Betrieb des Kompressors 3 wird auf einen Dauerbetrieb bei Volllast des Kompressors 3 verzichtet, was bei herkömmlichen Gasversorgungsanlagen 1 die Regel ist. Druckschwankungen in der Pipeline 2 werden bei herkömmlichen Gasversorgungsanlagen 1 durch eine entsprechende Drosselung stromauf des Kompressors 3 realisiert. Hierbei wird unnötig Energie verbraucht, was den Gesamtwirkungsgrad der Kraftwerksanlage senkt.

Bei der erfindungsgemäßen Gasversorgungsanlage 1 werden generell zwei unterschiedliche Betriebszustände voneinander unterschieden: Zum einen der Betrieb der Gasversorgungsanlage 1 bei einem Kompressoreintrittistdruck p_{1IST}, der kleiner ist als ein erforderlicher Kompressoraustrittsolldruck p_{2SOLL}, also p_{1IST} < p_{2SOLL}, und zum andern ein Betrieb bei einem Kompressoreintrittistdruck p_{1IST}, der größer ist als der erwünschte Kompressoraustrittsolldruck p_{2SOLL}, also p_{1IST} > p_{2SOLL.} Es ist klar, dass der Zustand, bei dem der Kompressoreintrittistdruck p_{1IST} gleich dem erwünschten Kompressoraustrittsolldruck p_{2SOLL} ist (p_{1IST}=p_{2SOLL}), zweckmäßig dem einen oder dem anderen der beiden oben geschilderten Betriebszustände oder alternativ einem weiteren Betriebzustand zugeordnet werden kann.

Eine Besonderheit ist hier, dass der Kompressoreintrittdruck p₁ stromauf der dem Kompressor 3 zugeordneten Druckabsenkeinrichtung 5 gemessen wird, also nicht unmittelbar am Kompressoreintritt.

Die Steuereinrichtung 19 regelt nun den Kompressor 3 in Abhängigkeit eines Soll-Ist-Vergleichs für den Kompressoraustrittsdruck p₂. Erfindungsgemäß wird dabei der Kompressoraustrittsolldruck p_{2SOLL} in Abhängigkeit des Verbraucheintrittsolldrucks p_{3SOLL} ermittelt. Dieser Verbrauchereintrittsolldruck p_{3SOLL} kann beispielsweise von einer hier nicht gezeigten Steuerung des Verbrauchers 4 der Steuereinrichtung 19 zugeführt werden. Erfindungsgemäß ist weiterhin vorgesehen, dass die Gasversorgungsanlage 1 den Verbrauchereintrittsolldruck p_{3SOLL} im wesentlichen autonom bestimmt. Dabei erfolgt die Ermittlung des Verbrauchereintrittsolldrucks p_{3SOLL} in Abhängigkeit wenigstens eines Verbraucherparameters, wie z.B. der aktuellen Leistungsanforderung an den Verbraucher, und/oder wenigstens eines Umgebungsparameters, beispielsweise der Umgebungstemperatur und/oder des Umgebungsdrucks und/oder der Umgebungsfeuchtigkeit. Durch entsprechende Berechnungsmethoden kann die Steuereinrichtung 19 aus dem wenigstens einen Umgebungsparameter und aus dem wenigstens einen Verbraucherparameter den erforderlichen Verbrauchereintrittsolldruck p_{3SOLL} ermitteln, der vorliegen muss, damit der Verbraucher 4 einen vorbestimmten Betriebszustand, zweckmäßig den Nennbetriebszustand, erreichen kann.

Da im vorliegenden Fall zwischen dem Verbraucher 4 und dem Kompressor 3 weitere Komponenten in der Pipeline 2 angeordnet sind, nämlich das Feinfilter 9 und die Vorheizeinrichtung 10, kommt es zwischen Kompressor 3 und Verbraucher 4 zwangsläufig zu einem Druckabfall, der bestimmbar ist und somit bei der Berechnung des Kompressoraustrittsolldrucks p_{2SOLL} berücksichtigt werden kann. Dementsprechend wird der Kompressoraustrittsolldruck P_{2SOLL} erfindungsgemäß außerdem in Abhängigkeit des Druckabfalls ermittelt, der sich im Betrieb der Gasversorgungsanlage 1 zwischen Kompressoraustritt und Verbraucheintritt einstellt.

Für den Fall, dass der Kompressoreintrittistdruck p_{1IST} kleiner ist als der Kompressoraustrittsolldruck p_{2SOLL} aktiviert die Steuereinrichtung 19 den ersten Bypass 11 und den Kompressor 3. Die Druckabsenkeinrichtung 5, der zweite Bypass 13 und die Vorheizeinrichtung 10 sind dann deaktiviert. Das bedeutet, dass bei einem Druck in der Pipeline 2, der kleiner ist als der Kompressoraustrittsolldruck p_{2SOLL} stromauf des Kompressors 3 im wesentlichen keine Drosselung stattfindet. Ebenso wird stromab des Kompressors 3 eine Drosselung bis zum Verbraucher 4 möglichst vermieden, um insgesamt den Energieverbrauch des Kompressors 3 zu minimieren.

Bei einer anderen Ausführungsform, bei welcher der Kompressor 3 variabel angesteuert werden kann, können der externe erste Bypass 11 und/oder der externe zweite Bypass 13 entfallen; ebenso kann dann grundsätzlich auf die Druckabsenkeinrichtung 5 verzichtet werden. Insbesondere kann bei einer solchen Ausführungsform der dritte Bypass 17 ausreichen.

Für den Fall, dass der Kompressoreintrittistdruck p_{1IST} größer ist als der gewünschte Kompressoraustrittsolldruck p_{2SOLL}, betätigt die Steuereinrichtung 19 die Komponenten der Gasversorgungsanlage 1 so, dass nunmehr der erste Bypass 11 deaktiviert, die Druckabsenkeinrichtung 5 aktiviert, der Kompressor 3 deaktiviert, der zweite Bypass 13 aktiviert und gegebenenfalls die Vorheizeinrichtung 10 aktiviert wird. In diesem Betriebszustand kann auf den Betrieb des Kompressors 3 vollständig verzichtet werden, so dass dieser dann keine Energie verbraucht.

Insgesamt ermöglicht die erfindungsgemäße Versorgungsanlage 1 somit einen reduzierten Energieverbrauch, was dem Gesamtwirkungsgrad der Kraftwerksanlage zugute kommt.

Der dritte Bypass 17 kann außerdem für besondere Betriebszustände aktiviert werden, beispielsweise für den Fall, dass der Kompressoreintrittistdruck p_{1IST} gleich dem Kompressoraustrittsolldruck p_{2SOLL} ist. Dieser "besondere Betriebszustand" soll an sich den gewünschten Ideal- oder Nennzustand bilden, da dann weder eine Drosselung noch eine Kompression des Gases erforderlich ist.

### Bezugszeichenliste

- 1: Gasversorgungsanlage
- 2: Pipeline
- 3: Kompressor
- 4: Verbraucher/Gasturbine
- 5: Druckabsenkeinrichtung
- 6: Taupunktheizeinrichtung
- 7: Abscheideeinrichtung
- 8: Sperrventil
- 9: Feinfilter
- 10: Vorheizeinrichtung
- 11: erster Bypass
- 12: erstes Steuerventil
- 13: zweiter Bypass
- 14: zweites Steuerventil
- 17: dritter Bypass
- 18: drittes Steuerventil
- 19: Steuereinrichtung
- 20: Steuerleitung
- 21: erster Drucksensor
- 22: zweiter Drucksensor
- 23: dritter Drucksensor
- 24: Umgebungsparametersensor
- 25: Umgebungsparametersensor
- 26: Umgebungsparametersensor
- 27: Signalleitung

## Patentansprüche

1. Verfahren zum Betreiben einer Gasversorgungsanlage (1) für eine Gasturbine mit einer Gas zuführenden Pipeline (2), einen in der Pipeline (2) angeordneten, regelbaren Kompressor (3) und wenigstens einem an die Pipeline (2) angeschlossenen, dem Kompressor (3) nachgeschalteten verbraucher, nämlich einer Gasturbine (4), wobei der Kompressor (3) in Abhängigkeit eines Vergleichs von einem Kompressorauslasssolldruck (p_{2SOLL}) mit einem Kompressorauslassistdruck (p_{2IST}) geregelt wird, wobei der Kompressoraustrittsolldruck (p_{2SOLL}) in Abhängigkeit eines Verbrauchereintrittsolldrucks (p_{3SOLL}) ermittelt wird und der Verbrauchereintrittsolldruck (p_{3SOLL}) in Abhängigkeit wenigstens eines Verbraucherparameters und/oder wenigstens eines Umgebungsparameters ermittelt wind
**dadurch gekennzeichnet,**
**dass** der Kompressoraustrittsolldruck (p_{2SOLL}) außerdem in Abhängigkeit eines Druckabfalls ermittelt wird, der sich in der Pipeline (2) zwischen einem Kompressoraustritt und einem Verbrauchereintritt einstellt.

2. Verfahren nach Anspruch 1,
**dadurch gekennzeichnet,**
**dass** der Kompressor (3) hinsichtlich seiner Leistungsabgabe geregelt wird.

3. Verfahren nach einem der Ansprüche 1 oder 2,
**dadurch gekennzeichnet,**
**dass** eine Druckabsenkeinrichtung (5) vorgesehen ist, die entweder dem Kompressor (3) vorgeschaltet und in der Pipeline (2) angeordnet ist oder die zumindest hinsichtlich ihrer Druckabsenkfunktion in den Kompressor (3) integriert ist.

4. Verfahren nach Anspruch 3,
**dadurch gekennzeichnet,**
- **dass** der Kompressoreintrittdruck (p₁) stromauf der Druckabsenkeinrichtung (5) gemessen wird,
- **dass** bei einem Kompressoreintrittistdruck (p_{1IST}), der kleiner ist als der Kompressoraustrittsolldruck (p_{2SOLL}), die Druckabsenkeinrichtung (5) ausgeschaltet und der Kompressor (3) eingeschaltet wird,
- **dass** bei einem Kompressoreintrittistdruck (p_{1IST}), der größer ist als der Kompressoraustrittsolldruck (p_{2SOLL}), die Druckabsenkeinrichtung (5) eingeschaltet und der Kompressor (3) ausgeschaltet wird.

5. Verfahren nach Anspruch 4,
**dadurch gekennzeichnet,**
**dass** ein den Kompressor (3) und die Druckabsenkeinrichtung (5) umgehender, steuerbarer, interner oder externer Bypass (17) vorgesehen ist, durch den das Gas hindurchgeführt wird, wenn der Kompressoreintrittsdruck (p_{1IST}) gleich groß ist wie der Kompressoraustrittssolldruck (p_{2SOLL}).

6. Verfahren nach Anspruch 4 oder 5,
**dadurch gekennzeichnet,**
- **dass** in der Pipeline (2) eine dem Kompressor (3) nachgeschaltete und der Gasturbine (4) vorgeschaltete Vorheizeinrichtung (10) angeordnet ist,
**dass** bei einem Kompressoreintrittistdruck (p_{1IST}), der größer ist als der Kompressoraustrittsolldruck (p_{2SOLL}), die Vorhelzelnrichtung (10) eingeschaltet wird,
- **dass** bei einem Kompressoreintrittistdruck (p_{1IST}), der kleiner ist als der Kompressoraustrittsolldruck (P_{2SOLL}), die Vorheizeinrichtung (10) ausgeschaltet wird.

7. Gasversorgungsanlage für eine Gasturbine mit einer Gas zuführenden Pipeline (2), einem in der Pipeline (2) angeordneten, von einer Steuereinrichtung (19) regelbaren Kompressor (3) und wenigstens einem dem Kompressor (3) nachgeschalteten verbraucher, nämlich einer Gasturbine (4), wobei die Steuereinrichtung (19) zur Regelung des Kompressors (3) in Abhängigkeit eines Soll-Ist-Vergleichs des Kompressoraustrittdrucks (p₂) konfiguriert ist,
wobei die Steuereinrichtung (19) zur Ermittlung des Kompressoraustrittsolldruck (p_{2SOLL}) in Abhängigkeit eines Verbraucheintrittssolldrucks (p_{3SOLL}) konfiguriert ist und die Steuereinrichtung (19) zur Ermittlung des Verbrauchereintrittsolldruck (p_{3SOLL}) In Abhängigkeit wenigstens eines Verbraucherparameters und/oder wenigstens eines Umgebungsparameters konfiguriert ist
**dadurch gekennzeichnet,**
- **dass** die Steuereinrichtung (19) zur Ermittlung des Kompressoraustrittsolldruck (p_{2SOLL}) in Abhängigkeit eines Druckabfalls, der sich im Betrieb in der Pipeline (2) zwischen einem Kompressoraustritt und einem Verbraucheintritt einstellt, konfiguriert ist.

8. Gasversorgungsanlage nach Anspruch 7,
**dadurch gekennzeichnet,**
**dass** die Steuereinrichtung (19) zur Regelung der Leistungsabgabe des Kompressors (3) konfiguriert ist.

9. Gasversorgungsanlage nach einem der Ansprüche 7 oder 8,
**dadurch gekennzeichnet,**
**dass** eine regelbare Druckabsenkeinrichtung (5) vorgesehen ist, die entweder dem Kompressor (3) vorgeschaltet und In der Pipeline (2) angeordnet ist oder die zumindest hinsichtlich ihrer Druckabsenkfunktion in den Kompressor (3) integriert ist.

10. Gasversorgungsanlage nach Anspruch 9,
**dadurch gekennzeichnet,**
- **dass** der Kompressoreintrittistdruckmessung (P_{1IST}) stromauf der Druckabsenkeinrichtung (5) angeordnet ist,
- **dass** die Steuereinrichtung (19) so konfiguriert ist, dass im Betrieb bei einem Kompressoreintrittistdruck (p_{1IST}), der kleiner ist als der Kompressoraustrittsolldruck (p_{2SOLL}), die Druckabsenkeinrichtung (5) ausschaltet wird und den Kompressor (3) einschaltet und geregelt betrieben wird,
- **dass** die Steuereinrichtung (19) so konfiguriert ist, dass im Betrieb bei einem Kompressoreintrittistdruck (p_{1IST}), der größer ist als der Kompressoraustrittsolldruck (p_{2SOLL}), die Druckabsenkeinrichtung (5) einschaltet und geregelt betrieben wird und den Kompressor (3) ausschaltet wird.

11. Gasversorgungsanlage nach Anspruch 10,
**dadurch gekennzeichnet,**
**dass** ein den Kompressor (3) und die Druckabsenkeinrichtung (5) umgehender, steuerbarer, interner oder externer Bypass (17) vorgesehen ist, und die Steuereinrichtung (19) so konfiguriert ist, dass sie das Gas durch den internen oder externen Bypass (17) im Betrieb hindurchleitet, wenn der Kompressoreintrittistdruck (p_{1IST}) gleich groß ist wie der Kompressoraustrittsolldruck (P_{2SOLL}).

12. Gasversorgungsanlage nach Anspruch 10 oder 11,
**dadurch gekennzeichnet,**
- **dass** in der Pipeline (2) eine dem Kompressor (3) nachgeschaltete und der Gasturbine (4) vorgeschaltete, regelbare Vorheizeinrichtung (10) angeordnet ist,
- **dass** die Steuereinrichtung (19) so konfiguriert ist, dass sie im Betrieb bei einem Kompressoreintrittistdruck (p_{1IST}), der größer als der Kompressoraustrittsolldruck (p_{2SOLL}), die Vorheizeinrichtung (10) einschaltet und geregelt betreibt,
- **dass** die Steuereinrichtung (19) so konfiguriert ist, dass sie im Betrieb bei einem Kompressoreintrittistdruck (p_{1IST}), der kleiner ist als der Kompressoraustrittsolldruck (p_{2SOLL}), die Vorheizeinrichtung (10) ausschaltet.

## Claims

1. Method for operating a gas supply installation (1) for a gas turbine, with a pipeline (2) supplying gas, a controllable compressor (3) arranged in the pipeline (2) and at least one consumer, namely a gas turbine (4), which is connected to the pipeline (2) downstream of the compressor (3), wherein the compressor (3) is controlled in dependence on a comparison between a compressor outlet setpoint pressure (p_{2SOLL}) and a compressor outlet actual pressure (p_{2IST}), wherein the compressor outlet setpoint pressure (p_{2SOLL}) is determined in dependence on a consumer inlet setpoint pressure (p_{3SOLL}) and the consumer inlet setpoint pressure (p_{3SOLL}) is determined in dependence on at least one consumer parameter and/or at least one ambient parameter,
**characterized in that**
the compressor outlet setpoint pressure (p_{2SOLL}) is further determined in dependence on a pressure drop which arises in the pipeline (2) between a compressor outlet and a consumer inlet.

2. Method according to Claim 1,
**characterized in that**
the compressor (3) is controlled with respect to its power output.

3. Method according to Claim 1 or 2,
**characterized in that**
there is provided a pressure-lowering device (5) which is either connected upstream of the compressor (3) and arranged in the pipeline (2) or which is integrated in the compressor (3) at least with respect to its pressure-lowering function.

4. Method according to Claim 3,
**characterized in that**
- the compressor inlet pressure (p₁) is measured upstream of the pressure-lowering device (5),
- in the event that a compressor inlet actual pressure (p_{1IST}) is lower than the compressor outlet setpoint pressure (p_{2SOLL}), the pressure-lowering device (5) is switched off and the compressor (3) is switched on,
- in the event that a compressor inlet actual pressure (p_{1IST}) is higher than the compressor outlet setpoint pressure (p_{2SOLL}), the pressure-lowering device (5) is switched on and the compressor (3) is switched off.

5. Method according to Claim 4,
**characterized in that**
there is provided a controllable internal or external bypass (17) which bypasses the compressor (3) and the pressure-lowering device (5) and through which the gas is fed when the compressor inlet actual pressure (p_{1IST}) is the same as the compressor outlet setpoint pressure (P_{2SOLL}).

6. Method according to Claim 4 or 5,
**characterized in that**
- a preheating device (10) is arranged in the pipeline (2), downstream of the compressor (3) and upstream of the gas turbine (4),
- in the event that a compressor inlet actual pressure (p_{1IST}) is higher than the compressor outlet setpoint pressure (p_{2SOLL}), the preheating device (10) is switched on,
- in the event that a compressor inlet actual pressure (p_{1IST}) is lower than the compressor outlet setpoint pressure (p_{2SOLL}), the preheating device (10) is switched off.

7. Gas supply installation for a gas turbine, with a pipeline (2) supplying gas, a compressor (3) which can be controlled by a controller (19) and which is arranged in the pipeline (2), and at least one consumer, namely a gas turbine (4), downstream of the compressor (3), wherein the controller (19) for controlling the compressor (3) is configured in dependence on a comparison between the setpoint and actual values of the compressor outlet pressure (p₂) wherein the controller (19) for determining the compressor outlet setpoint pressure (p_{2SOLL}) is configured in dependence on a consumer inlet setpoint pressure (p_{3SOLL}) and the controller (19) for determining the consumer inlet setpoint pressure (p_{3SOLL}) is configured in dependence on at least one consumer parameter and/or at least one ambient parameter,
**characterized in that**
the controller (19) for determining the compressor outlet setpoint pressure (p_{2SOLL}) is configured in dependence on a pressure drop which arises in operation in the pipeline (2) between a compressor outlet and a consumer inlet.

8. Gas supply installation according to Claim 7,
**characterized in that**
the controller (19) is configured for controlling the power output of the compressor (3).

9. Gas supply installation according to one of Claims 7 or 8,
**characterized in that**
there is provided a controllable pressure-lowering device (5) which is either connected upstream of the compressor (3) and arranged in the pipeline (2) or which is integrated in the compressor (3) at least with respect to its pressure-lowering function.

10. Gas supply installation according to Claim 9, **characterized in that**
- the compressor inlet actual pressure measurement (p_{1IST}) is arranged upstream of the pressure-lowering device (5),
- the controller (19) is configured such that, in operation, in the event that a compressor inlet actual pressure (p_{1IST}) is lower than the compressor outlet setpoint pressure (p_{2SOLL}), the pressure-lowering device (5) is switched off and the compressor (3) is switched on and operated in a controlled manner,
- the controller (19) is configured such that, in operation, in the event that a compressor inlet actual pressure (p_{14IST}) is higher than the compressor outlet setpoint pressure (p_{2SOLL}), the pressure-lowering device (5) is switched on and operated in a controlled manner and the compressor (3) is switched off.

11. Gas supply installation according to Claim 10,
**characterized in that**
there is provided a controllable internal or external bypass (17) which bypasses the compressor (3) and the pressure-lowering device (5) and the controller is configured such that it guides the gas through the internal or external bypass (17) in operation when the compressor inlet actual pressure (p_{1IST}) is the same as the compressor outlet setpoint pressure (p_{2SOLL}).

12. Gas supply installation according to Claim 10 or 11,
**characterized in that**
- a controllable preheating device (10) is arranged in the pipeline (2), downstream of the compressor (3) and upstream of the gas turbine (4),
- the controller (19) is configured such that, in operation, in the event that a compressor inlet actual pressure (p_{1IST}) is higher than the compressor outlet setpoint pressure (p_{2SOLL}), it switches on the preheating device (10) and operates it in a controlled manner,
- the controller (19) is configured such that, in operation, in the event that a compressor inlet actual pressure (p_{1IST}) is lower than the compressor outlet setpoint pressure (p_{2SOLL}), it switches off the preheating device (10).

## Revendications

1. Procédé pour faire fonctionner une installation d'alimentation en gaz (1) pour une turbine à gaz comprenant une canalisation (2) acheminant du gaz, un compresseur (3) réglable disposé dans la canalisation (2) et au moins un consommateur, à savoir une turbine à gaz (4), raccordé à la canalisation (2) et placé en aval du compresseur (3), le compresseur (3) étant réglé en fonction d'une comparaison d'une pression de consigne de sortie de compresseur (p_{2SOLL}) avec une pression réelle de sortie de compresseur (p_{2IST}), la pression de consigne de sortie de compresseur (p_{2SOLL}) étant déterminée en fonction d'une pression de consigne d'entrée de consommateur (p_{3SOLL}) et la pression de consigne d'entrée de consommateur (p_{3SOLL}) étant déterminée en fonction d'au moins un paramètre de consommateur et/ou d'au moins un paramètre d'environnement,
**caractérisé en ce que**
la pression de consigne de sortie de compresseur (p_{2SOLL}) est en outre déterminée en fonction d'une réduction de pression qui se présente dans la canalisation (2) entre une sortie de compresseur et une entrée de consommateur.

2. Procédé selon la revendication 1,
**caractérisé en ce que**
le compresseur (3) est réglé en termes de sa puissance débitée.

3. Procédé selon l'une quelconque des revendications 1 et 2,
**caractérisé en ce**
**qu'**un dispositif de diminution de pression (5) est prévu, lequel est soit placé en amont du compresseur (3) et disposé dans la canalisation (2), soit intégré dans le compresseur (3) au moins en termes de sa fonction de diminution de pression.

4. Procédé selon la revendication 3,
**caractérisé en ce que**
- la pression d'entrée de compresseur (p₁) est mesurée en amont du dispositif de diminution de pression (5),
- dans le cas d'une pression réelle d'entrée de compresseur (p_{1IST}) qui est inférieure à la pression de consigne de sortie de compresseur (p_{2SOLL}), le dispositif de diminution de pression (5) est déconnecté et le compresseur (3) est connecté,
- dans le cas d'une pression réelle d'entrée de compresseur (p_{1IST}) qui est supérieure à la pression de consigne de sortie de compresseur (p_{2SOLL}), le dispositif de diminution de pression (5) est connecté et le compresseur (3) est déconnecté.

5. Procédé selon la revendication 4,
**caractérisé en ce**
**qu'**une dérivation interne ou externe (17) pouvant être commandée et contournant le compresseur (3) et le dispositif de diminution de pression (5) est prévue, à travers laquelle le gaz est guidé lorsque la pression réelle d'entrée de compresseur (p_{1IST}) est égale à la pression de consigne de sortie de compresseur (p_{2SOLL}).

6. Procédé selon la revendication 4 ou 5,
**caractérisé en ce que**
- un dispositif de préchauffage (10) placé en aval du compresseur (3) et placé en amont de la turbine à gaz (4) est disposé dans la canalisation (2),
- dans le cas d'une pression réelle d'entrée de compresseur (p_{1IST}) qui est supérieure à la pression de consigne de sortie de compresseur (p_{2SOLL}), le dispositif de préchauffage (10) est connecté,
- dans le cas d'une pression réelle d'entrée de compresseur (p_{1IST}) qui est inférieure à la pression de consigne de sortie de compresseur (p_{2SOLL}), le dispositif de préchauffage (10) est déconnecté.

7. Installation d'alimentation en gaz pour une turbine à gaz comprenant une canalisation (2) acheminant du gaz, un compresseur (3) pouvant être réglé par un dispositif de commande (19) et disposé dans la canalisation (2) et au moins un consommateur, à savoir une turbine à gaz (4), placé en aval du compresseur (3), le dispositif de commande (19) étant configuré pour le réglage du compresseur (3) en fonction d'une comparaison valeur de consigne-valeur réelle de la pression de sortie de compresseur (p₂),
le dispositif de commande (19) étant configuré pour la détermination de la pression de consigne de sortie de compresseur (p_{2SOLL}) en fonction d'une pression de consigne d'entrée de consommateur (p_{3SOLL}) et le dispositif de commande (19) étant configuré pour la détermination de la pression de consigne d'entrée de consommateur (p_{3SOLL}) en fonction d'au moins un paramètre de consommateur et/ou d'au moins un paramètre d'environnement, **caractérisée en ce que**
- le dispositif de commande (19) est configuré pour la détermination de la pression de consigne de sortie de compresseur (p_{2SOLL}) en fonction d'une réduction de pression qui se présente lors du fonctionnement dans la canalisation (2) entre une sortie de compresseur et une entrée de consommateur.

8. Installation d'alimentation en gaz selon la revendication 7,
**caractérisée en ce que**
le dispositif de commande (19) est configuré pour le réglage de la puissance débitée du compresseur (3).

9. Installation d'alimentation en gaz selon l'une quelconque des revendications 7 et 8,
**caractérisée en ce**
**qu'**un dispositif de diminution de pression réglable (5) est prévu, lequel est soit placé en amont du compresseur (3) et disposé dans la canalisation (2), soit intégré dans le compresseur (3) au moins en termes de sa fonction de diminution de pression.

10. Installation d'alimentation en gaz selon la revendication 9,
**caractérisée en ce que**
- la mesure de pression réelle d'entrée de compresseur (p_{1IST}) est située en amont du dispositif de diminution de pression (5),
- le dispositif de commande (19) est configuré de telle sorte que, lors du fonctionnement, dans le cas d'une pression réelle d'entrée de compresseur (p_{1IST}) qui est inférieure à la pression de consigne de sortie de compresseur (p_{2SOLL}), le dispositif de diminution de pression (5) est déconnecté et le compresseur (3) est connecté et fonctionne de manière réglée,
- le dispositif de commande (19) est configuré de telle sorte que, lors du fonctionnement, dans le cas d'une pression réelle d'entrée de compresseur (p_{1IST}) qui est supérieure à la pression de consigne de sortie de compresseur (p_{2SOLL}), le dispositif de diminution de pression (5) est connecté et fonctionne de manière réglée et le compresseur (3) est déconnecté.

11. Installation d'alimentation en gaz selon la revendication 10,
**caractérisée en ce**
**qu'**une dérivation interne ou externe (17) pouvant être commandée et contournant le compresseur (3) et le dispositif de diminution de pression (5) est prévue, et le dispositif de commande (19) est configuré de telle sorte qu'il guide le gaz à travers la dérivation interne ou externe (17) lors du fonctionnement lorsque la pression réelle d'entrée de compresseur (p_{1IST}) est égale à la pression de consigne de sortie de compresseur (P_{2SOLL}).

12. Installation d'alimentation en gaz selon la revendication 10 ou 11,
**caractérisée en ce que**
- un dispositif de préchauffage réglable (10) placé en aval du compresseur (3) et placé en amont de la turbine à gaz (4) est disposé dans la canalisation (2),
- le dispositif de commande (19) est configuré de telle sorte que, lors du fonctionnement, dans le cas d'une pression réelle d'entrée de compresseur (p_{1IST}) qui est supérieure à la pression de consigne de sortie de compresseur (p_{2SOLL}), il connecte et fait fonctionner de manière réglée le dispositif de préchauffage (10),
- le dispositif de commande (19) est configuré de telle sorte que, lors du fonctionnement, dans le cas d'une pression réelle d'entrée de compresseur (p_{1IST}) qui est inférieure à la pression de consigne de sortie de compresseur (p_{2SOLL}), il déconnecte le dispositif de préchauffage (10).
